# EUROPÄISCHE PATENTSCHRIFT

(11) **EP 0 792 443 B1**
(45) Veröffentlichungstag und Bekanntmachung des Hinweises auf die Patenterteilung: **12.05.1999**
(21) Anmeldenummer: 95935936.5
(22) Anmeldetag: 13.10.1995
(51) Int. Cl.: G01J 5/12

(54) **SENSOR ZUR STRAHLUNGSPYROMETRISCHEN TEMPERATURMESSUNG BEI HOHER UMGEBUNGSTEMPERATUR**
SENSOR FOR RADIATION-PYROMETRIC TEMPERATURE MEASUREMENT AT HIGH AMBIENT TEMPERATURES
DETECTEUR PERMETTANT DE MESURER DES TEMPERATURES PAR PYROMETRIE A RADIATION A DES TEMPERATURES AMBIANTES ELEVEES

(30) Priorität: 19.11.1994 DE 4441257
(43) Veröffentlichungstag der Anmeldung: 03.09.1997
(73) Patentinhaber: PLEVA GMBH, 72186 Empfingen (DE)
(72) Erfinder: PLEVA, Ralf, D-72250 Freudenstadt (DE); PLEVA, Harry, D-72160 Horb (DE); LÖBEL, Wilfried, D-09111 Chemnitz (DE)
(74) Vertreter: Wasmuth, Rolf, Dipl.-Ing.
(86) Internationale Anmeldenummer: EP9504038
(87) Internationale Veröffentlichungsnummer: WO9616318

(56) Entgegenhaltungen:
- GB-A- 2 090 418
- US-A- 5 059 543

## Beschreibung

Die Erfindung betrifft einen Sensor zur strahlungspyrometrischen Bestimmung der Temperatur eines Meßobjektes, insbesondere unter Bedingungen hoher Umgebungstemperaturen im Innenraum eines Trockners oder dgl. nach dem Oberbegriff des Anspruchs 1.

Mit derartigen Sensoren ist eine berührungslose Messung der Oberflächentemperatur eines Meßobjektes, z. B. von festen Werkstoffen, Materialien und Erzeugnissen in Heißlufttrocknern und Wärmebehandlungsanlagen möglich. Mit mehreren, möglichst nah an der zu messenden Oberfläche angeordneten Sensoren ist die Bestimmung eines räumlichen und zeitlichen Temperaturprofils des behandelten Materials möglich, was neben anderen Prozeßparametern eine wichtige Voraussetzung zur optimierten Prozeßführung im Hinblick auf Wirtschaftlichkeit und Qualitätssicherung darstellt. Derartige Wärmebehandlungsanlagen werden in der Textilindustrie, der Papierindustrie, der Holzindustrie, der Möbelindustrie und auch bei der Fertigung von Gipsplatten oder dgl. eingesetzt.

Es ist bekannt, außerhalb der Anlage einen Strahlungspyrometer vorzusehen und durch eine Öffnung bzw. ein wärmestrahlungsdurchlässiges Fenster das Meßobjekt bzw. dessen Oberfläche anzuvisieren und die Temperatur zu messen. Nur wenn eine optische und für die Strahlung durchlässige Sichtverbindung gegeben ist, kann die Messung ausreichend genau sein. Liegt jedoch ein relativ großer Abstand zwischen Meßobjekt und Pyrometer vor, wird die Messung durch strahlungsabsorbierende Gase, Dämpfe oder Aerosole erheblich gestört. Weitere Störfaktoren können der Emissionsgrad des Meßobjektes im Hinblick auf die Reflexion von Fremdstrahlung oder - bei Anwendung von Fenstern - deren spektrale Absorptionseigenschaften sein. Die Anordnung der Strahlungspyrometer verlangt zur Verhinderung von Kondensations- und Sublimationseffekten und zum Wärmeschutz der Pyrometer-Optik und Pyrometer-Elektronik die Installation von einer Querluftsperre und von Kühlvorrichtungen. Der Einsatz mehrerer Pyrometer, wie dies zur Messung eines Temperaturprofils notwendig ist, ist aufgrund des Aufwandes wirtschaftlich kaum vertretbar.

Auch ist bekannt (Textilbetrieb 1981, Heft 4, Seite 55), zur Prozeßkontrolle in Bahntrocknern mehrere einfache Temperatursensoren z. B. als Thermoelemente längs der Bahn nacheinander direkt auf der Bahn schleifend in geringem Abstand darüber oder im Abluftstrom anzuordnen. Dies ermöglicht zwar eine tendenzmäßige Kontrolle der Temperatur; der für bestimmte chemische bzw. physikalisch-chemische Vorgänge wichtige Temperaturverlauf kann damit aber nicht hinreichend genau gemessen werden.

Aus der DE-A 41 02 524 ist ein Sensor zur Strahlungstemperaturmessung im infraroten Spektralbereich bekannt, der als miniaturisierte, in Dünnschichttechnologie hergestellte Thermosäule aufgebaut ist. Dieser Sensor widersteht jedoch nicht den im Inneren von Wärmebehandlungsanlagen herrschenden Temperaturen. Auch bekannte Widerstandsthermometer (DE-A 35 36 133) sind im Bereich hoher Umgebungstemperaturen nicht mit ausreichender Genauigkeit einsetzbar.

Der Erfindung liegt die Aufgabe zugrunde, einen Sensor zur Strahlungstemperaturmessung anzugeben, der auch bei hohen Umgebungstemperaturen eine genaue Temperaturmessung eines Meßobjektes in dessen unmittelbarer Nähe erlaubt.

Die Aufgabe wird nach den kennzeichnenden Merkmalen des Anspruchs 1 gelöst.

Der erfindungsgemäße Sensor erlaubt die Messung in unmittelbarer Nähe des Meßobjektes im Inneren eines Heißlufttrockners oder einer Wärmebehandlungsanlage. Dies wird ermöglicht durch die Anwendung von Werkstoffen und Verbindungen, die gegenüber hohen Temperaturen (z. B. bis zu 400°) beständig sind, so daß die mechanischen Eigenschaften des Sensors dem Einsatz gemäß gegeben sind. Überraschend hat sich gezeigt, daß bei dem erfindungsgemäßen Sensoraufbau die Temperatur des Meßobjektes sehr genau bestimmt werden kann, wobei der einfache Aufbau des Sensors dessen mehrfachen Einsatz an einer Wärmebehandlungsanlage wirtschaftlich möglich macht, so daß mit vertretbarem Aufwand und geringen Kosten Temperaturprofile erstellt werden können. Dabei ist wesentlich, daß die Drahtelemente der Thermopaare in den Durchgangsöffnungen liegen, so daß sie temperaturmäßig abgeschirmt liegen und das Thermopaar eine hohe Temperaturspannung abgibt. Die Vergleichs-Verbindungsstellen müssen hierzu von der Wärmestrahlung abgeschirmt liegen, was entweder durch Anordnung der Vergleichs-Verbindungsstellen auf der Rückseite des Tragkörpers verwirklicht ist oder durch ein wärmestrahlungsundurchlässiges Schild, hinter dem die Vergleichs-Verbindungsstellen nach Durchführung der Drahtelemente durch den Tragkörper zur Rückseite und zurück liegen.

Zur Kompensation von Störeinflüssen kann zur Bestimmung des Temperaturgefälles ein weiteres Thermopaar angeordnet sein, dessen strahlungssensitive Verbindungsstelle auf der Seite der Grundfläche und dessen Vergleichs-Verbindungsstellen Verbindungsstelle auf der Rückseite des Tragkörpers liegt, wobei die strahlungssensitive Verbindungsstelle hinter einem wärmestrahlungsundurchlässigen Schild angeordnet ist. Das so erhaltene Ausgangssignal liefert eine Information über die nichtstrahlungsbedingte Temperaturdifferenz zwischen den Gruppen der Verbindungsstellen und kann daher zur Korrektur der von den Thermosäulen angegebenen Temperaturdifferenz dienen.

Bevorzugt sind mehrere weitere Thermopaare zu einer zweiten Thermosäule zusammengefaßt, die einen gleichen Aufbau und eine gleiche Anordnung wie die erste Thermosäule aufweist. Die strahlungssensitiven Verbindungsstellen der zweiten Thermosäule liegen dabei hinter dem wärmestrahlungsundurchlässigen Schild. Die zweite Thermosäule wird mit der ersten Thermosäule gegenpolar in Reihe geschaltet, so daß sich solche thermoelektrischen Ströme gegenseitig aufheben, die keine strahlungsbedingte Ursache für die Temperaturdifferenz haben.

Um unter extremen Einsatzbedingungen bei diffuser Wärmestrahlung eine exakte Temperaturmessung der Oberfläche eines Meßobjektes zu gewährleisten, ist die dem Fenster zugewandte Grundfläche des Tragkörpers zweckmäßig symmetrisch in gleiche Sektoren, z. B. 2, 4, 6, 8 Sektoren aufgeteilt und in den Sektoren gleich ausgebildete und angeordnete Thermosäulen vorgesehen. Die Thermosäulen sind gegenpolar in Reihe geschaltet, wodurch sich Fehlsignale aufheben und ein hochgenaues Ausgangssignal erhalten wird.

Um einen besseren Angleich der Vergleichs-Verbindungsstellen an die mit der Umgebungstemperatur übereinstimmende Eigentemperatur des Sensors zu erhalten und damit die Empfindlichkeit durch Erhöhung der Temperaturdifferenz zwischen den Gruppen der Verbindungsstellen zu erhöhen, sind die Vergleichs-Verbindungsstellen wärmeleitend miteinander verbunden, bevorzugt mit einer wärmeleitenden Scheibe.

Durch die Anordnung einer strahlungsreflektierenden Schicht auf der dem wärmestrahlungsdurchlässigen Fenster zugewandten Grundfläche des Tragkörpers wird einerseits ein besserer Strahlungsaustausch zwischen den strahlungssensitiven Verbindungsstellen und dem Meßobjekt erzielt und andererseits eine strahlungsbedingte Erwärmung des Tragkörpers verhindert.

Zur Vergrößerung der strahlungssensitiven Flächen und damit zur Erhöhung der Empfindlichkeit sind die strahlungssensitiven Verbindungsstellen mit wärmestrahlungsabsorbierenden, zum Meßobjekt ausgerichteten, insbesondere metallischen Flächenelementen verbunden.

Zur Ermittlung der Objekttemperatur aus dem gemessenen strahlungsbedingten und korrigierten Signal der Temperaturdifferenz zwischen den beiden Gruppen der Verbindungsstellen ist zusätzlich die Kenntnis der Eigentemperatur des Sensors erforderlich. Deren Bestimmung erfolgt ebenfalls thermoelektrisch, indem an einer beliebigen Anschlußstelle einer aus dem Gehäuse herausgeführten Meßleitung eine Kompensationsleitung aus einem gegenüber der Meßleitung thermoelektrisch aktiven Material angeschlossen und aus dem Gehäuse herausgeführt ist.

Zur Auswertung des Temperaturdifferenzsignals ist die Kenntnis der Temperatur des Sensors im Bereich der strahlungssensitiven Verbindungsstellen zweckmäßig, weshalb dort ein Temperatursensor, z. B. ein Thermoelement angeordnet ist.

Die Gestaltung jedes Thermopaares der Thermosäule ist derart, daß das Verhältnis des Drahtdurchmessers zur Drahtlänge zwischen zwei Verbindungsstellen größer als etwa 1:100 ist, wobei das Drahtelement aus dem Material höherer Wärmeleitfähigkeit einen verhältnismäßig geringeren Durchmesser aufweist. Dadurch wird die strahlungsbedingte Beeinflussung der Temperatur der Vergleichs-Verbindungsstelle durch Wärmeleitung über die Drahtelemente minimiert, da der von der Drahtoberfläche an die umgebende Luft in der Durchgangsöffnung bzw. den Tragkörper abfließende Wärmestrom größer ist als derjenige zwischen den Verbindungsstellen.

Weitere Merkmale der Erfindung ergeben sich aus den weiteren Ansprüchen, der Beschreibung und der Zeichnung, in der nachfolgend im einzelnen beschriebene Ausführungsbeispiele der Erfindung dargestellt sind. Es zeigen:
- Fig. 1: im Schnitt einen schematischen Aufbau eines erfindungsgemäßen Sensors,
- Fig. 2: im Schnitt einen anderen Aufbau eines Sensors in einer Darstellung nach Fig. 1,
- Fig. 3: im Schnitt einen weiteren Aufbau eines Sensors in einer Darstellung gemäß Fig. 1,
- Fig. 4: eine Draufsicht auf eine Grundfläche eines Tragkörpers des Sensors mit zwei Thermosäulen,
- Fig. 5: eine Draufsicht auf die Grundfläche nach Fia. 4 mit vier Thermosäulen,
- Fig. 6: im Schnitt ein vierter Aufbau eines Sensors in einer Darstellung gemäß Fig. 1.

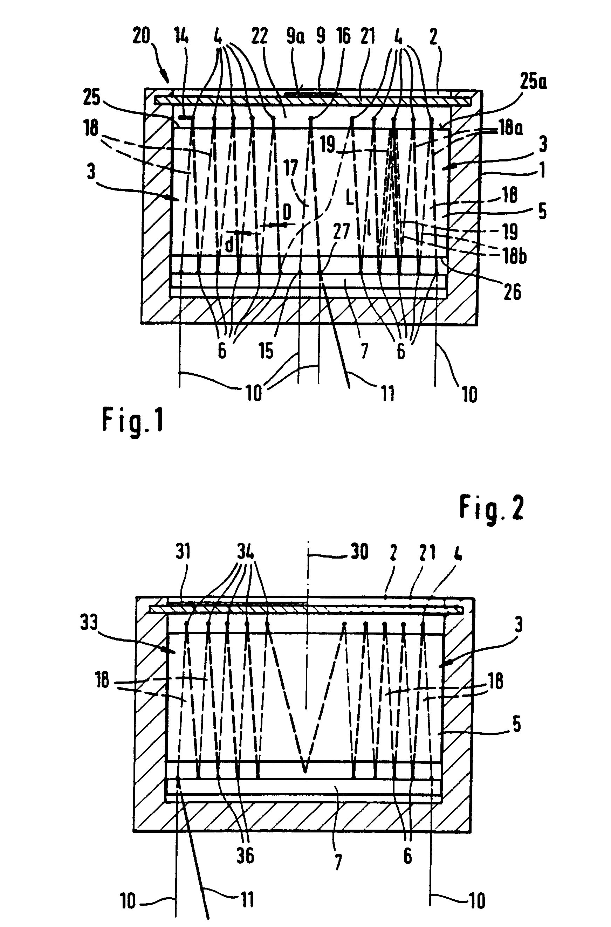

Der in Fig. 1 dargestellte Sensor zur strahlungspyrometrischen Bestimmung der Temperatur eines Meßobjektes ist insbesondere zum Einsatz bei hohen Umgebungstemperaturen vorgesehen, wie sie im Innenraum eines Trockners, einer Wärmebehandlungsanlage oder dgl. herrscht.

Der Sensor besteht im Ausführungsbeispiel aus einem gut wärmeleitendem Gehäuse 1, das bevorzugt aus Aluminium, Stahl oder Kupfer bestehen kann. Ist das zylindrische Gehäuse 1 aus Stahl gefertigt, kann eine Wanddicke von 2 mm zweckmäßig sein. Auf der einen Stirnseite 20 des zylindrischen Gehäuses 1 ist eine kreisrunde Öffnung vorgesehen, welche zweckmäßig 25 mm Durchmesser besitzt. Diese Öffnung bildet ein Fenster 2, welches von einer vorzugsweise 2 mm dicken, strahlungsdurchlässigen Scheibe 21 abgedeckt ist. Die Scheibe besteht insbesondere aus Bariumfluorid (BaF₂); sie ist für den langwelligen Infrarotbereich, also für Wärmestrahlung durchlässig. Es kann auch Germanium, Silicium oder dgl. als Material für die Scheibe zweckmäßig sein.

Im Innenraum 22 des metallischen Gehäuses ist ein Tragkörper 5 angeordnet, der zweckmäßig mit allseitigem Abstand zu den Wandungen des Gehäuses 1 liegt. Der Tragkörper 5 ist entsprechend dem zylindrischen Gehäuse 1 zylindrisch ausgebildet, wobei die axialen Stirnseiten 25, 26 etwa parallel zu den Stirnseiten des Gehäuses 1 liegen. Der Tragkörper 5 besteht aus einem schlecht wärmeleitenden bzw. wärmeisolierenden Material; im gezeigten Ausführungsbeispiel besteht der Tragkörper 5 aus einem zementgebundenen, leichten Silikat-Schaummaterial mit einer Wärmeleitfähigkeit von etwa 0,1W/Km. Der Durchmesser und die Höhe des Körpers sind bevorzugt gleich; sie betragen im Ausführungsbeispiel 30 mm.

In Achsrichtung des Tragkörpers 5 sind als Durchgangsbohrungen ausgebildete Öffnungen 19 vorgesehen, in denen im Ausführungsbeispiel jeweils ein Drahtelement 18a, 18b eines Thermopaares 18 angeordnet ist. Die Drahtelemente 18a und 18b mehrerer Thermopaare 18 sind zu einer Thermosäule 3 zusammengeschaltet, welche symmetrisch auf der eine ebene Grundfläche 25 bildenden axialen Stirnseite des Tragkörpers 5 verteilt sind. Im Ausführungsbeispiel nach Fig. 1 besteht die Thermosäule 3 aus dreißig Thermopaaren 18 der Materialkombination Nickel-Chrom/Nickel. Die Drahtelemente 18a haben einen Durchmesser von 0,2 mm (Nickel-Chrom); die Drahtelemente 18b haben einen Durchmesser von 0,1 mm (Ni). Das Verhältnis des Drahtdurchmessers D bzw. d zur Drahtlänge L bzw. 1 zwischen zwei Verbindungsstellen 4 und 6 ist größer als etwa 1:100. Das Drahtelement 18b aus dem Material höherer Wärmeleitfähigkeit weist einen verhältnismäßig geringeren Durchmesser auf.

Die ersten strahlungssensitiven oder heißen Verbindungsstellen 4 der Thermosäule 3 liegen auf der dem Fenster 2 zugewandten ebenen Grundfläche 25 symmetrisch verteilt angeordnet; die zweiten, kalten Vergleichs-Verbindungsstellen 6 liegen auf der der Grundseite 25 abgewandten Rückseite 26 des Tragkörpers 5. Wie Fig. 1 zeigt, sind die Vergleichs-Verbindungsstellen 6 über eine Scheibe 7 miteinander wärmeleitend verbunden, wobei zur Vermeidung von elektrischen Kurzschlüssen die Scheibe 7 ein elektrischer Isolator ist. In gleicher Weise besteht der Tragkörper 5 aus einem elektrisch isolierenden Material.

Ein weiteres Thermopaar 17 ist zweckmäßig angeordnet, um strahlungsbedingte Störungen zu kompensieren. Das Thermopaar 17 liegt mit seiner strahlungssensitiven Verbindungsstelle 16 bevorzugt im Zentrum der Grundfläche 25 hinter einem wärmestrahlungsundurchlässigen Schild 9, welches zweckmäßig auf der Scheibe 21 des Fensters 2 befestigt ist. Das Schild 9 ist wärmeübertragend mit der Scheibe 21 verbunden und auf der dem Meßobjekt zugewandten Seite 9a vorteilhaft verspiegelt. Um eine möglichst genaue Erfassung der Temperatur auf der Seite der Grundfläche 25 zu erhalten, kann die strahlungssensitive Verbindungsstelle 16 metallisch blank bzw. verspiegelt ausgebildet sein.

Um einen hohen Wirkungsgrad an den strahlungssensitiven Verbindungsstellen 4 der Thermosäule 3 zu erzielen, kann die ebene Grundfläche 25 blank bzw. metallisch verspiegelt ausgebildet sein. Die strahlungssensitiven Verbindungsstellen 4 sind zweckmäßig wärmestrahlungsabsorbierend ausgebildet; z. B. mit einem strahlungsabsorbierenden Pigment geschwärzt. In einer anderen Ausführungsform können die strahlungssensitiven Verbindungsstellen mit wärmestrahlungsabsorbierenden, zum Meßobjekt ausgerichteten, insbesondere metallischen, Flächenelementen 14 verbunden sein.

Die Vergleichs-Verbindungsstelle 15 des Thermopaares 17 ist bevorzugt mit den Vergleichs-Verbindungsstellen 6 der Thermosäule 3 wärmeübertragend verbunden, wozu die Vergleichs-Verbindungsstelle 15 bevorzugt auf der wärmeleitenden, elektrisch isolierenden Scheibe 7 befestigt ist. Die Scheibe 7 hat zweckmäßig den gleichen Durchmesser wie der Tragkörper 5.

Um auch ein die Temperatur auf der Rückseite 26 des Tragkörpers 5 wiedergebendes Signal zu erhalten, ist zweckmäßig an einer Anschlußstelle 27 einer Meßleitung 10 eine Kompensationsleitung 11 angeschlossen, die aus einem gegenüber der Meßleitung 10 thermoelektrisch aktiven Material besteht und wie die Meßleitungen 10 aus dem Gehäuse 1 herausgeführt ist.

Mit dem erfindungsgemäßen Sensor können an den Meßleitungen 10, 11 Ausgangssignale (Thermospannung) abgegriffen werden, welche eine genaue Bestimmung der durch das Fenster 2 eintretenden Wärmestrahlung erlauben und somit eine Bestimmung der Oberflächentemperatur des von dem Sensor anvisierten Meßobjektes. Dabei kann der erfindungsgemäße Sensor direkt im Inneren der Wärmebehandlungsanlagen eingesetzt werden, also im Bereich hoher Umgebungstemperaturen von bis zu 400°C. Alle verwendeten Werkstoffe sind gegenüber den hohen Temperaturen beständig. Es ist davon auszugehen, daß die Sensortemperatur unter solchen Bedingungen generell über der Temperatur des zu messenden Objektes liegt, und daß das Meßsignal durch Abkühlung der strahlungssensitiven Verbindungsstellen der Thermosäule ausgelöst wird.

Der Sensor gemäß dem Ausführungsbeispiel nach Fig. 2 entspricht im Grundaufbau dem nach Fig. 1, weshalb für gleiche Teile gleiche Bezugszeichen verwendet sind. In Abweichung von Fig. 1 ist auf dem Tragkörper 5 symmetrisch zu einer senkrecht zur Grundfläche 25 liegenden Mittelebene 30 eine zweite Thermosäule 33 angeordnet, deren strahlungssensitive Verbindungsstellen 34 hinter einem Schild 31 liegen, welcher die Hälfte des Fensters 2 wärmestrahlungsundurchlässig abdeckt. Das Schild 31 ist - wie vorstehend schon beschrieben - bevorzugt auf der dem Meßobjekt zugewandten Außenseite verspiegelt ausgeführt und steht in wärmeleitender Verbindung mit dem ihm tragenden Fenster 2. Die Vergleichs-Verbindungsstellen Verbindungsstellen 36 sind ebenso wie die Vergleichs-Verbindungsstellen 6 der ersten Thermosäule 3 auf der wärmeleitenden, elektrisch isolierenden Scheibe 7 befestigt, so daß die Vergleichs-Verbindungsstellen 6 und 36 der beiden Thermosäulen 3 und 33 auf gleichem Temperaturniveau liegen. Die Thermosäulen 3 und 33 sind gegenpolar in Reihe geschaltet, so daß sich solche thermoelektrischen Ströme gegeneinander aufheben, die keine strahlungsbedingte Ursache für die Temperaturdifferenz haben.

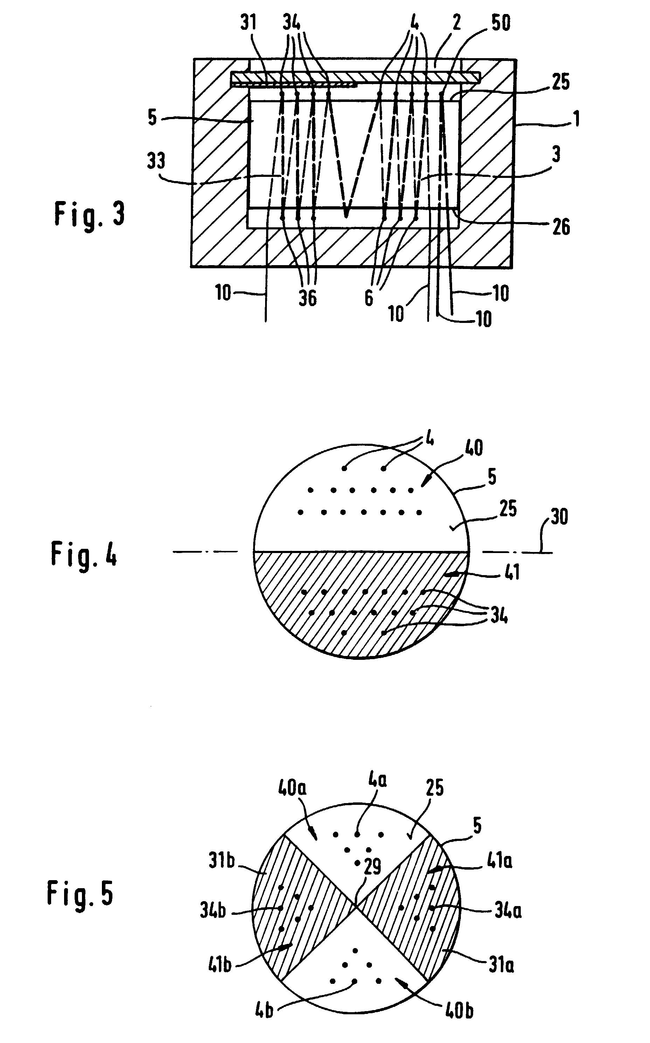

In Fig. 3 ist ein weiteres Ausführungsbeispiel eines erfindungsgemäßen Sensors gezeigt, der im Grundaufbau dem nach Fig. 2 entspricht. Für gleiche Teile sind gleiche Bezugszeichen verwendet. Im Ausführungsbeispiel nach Fig. 3 ist die wärmeleitende Scheibe für die Vergleichs-Verbindungsstellen 6 und 36 entfallen. Der Schild 31 ist auf der der Grundfläche 25 zugewandten Seite der Scheibe 21 aufgebracht, wobei die dem Meßobjekt zugewandte Seite verspiegelt ist. Der Schild 31 kann aus einer Folie bestehen, welche in wärmeübertragenden Verbindung mit dem Fenster 2 steht.

Die dem Fenster 2 zugewandte Grundfläche 25 des Tragkörpers 5 ist gemäß Fig. 3 in zwei Sektoren 40, 41 aufgeteilt, wobei in jedem Sektor fünfzehn strahlungssensitive Verbindungsstellen 4 und 34 vorgesehen sind. Die Drahtelemente verlaufen dabei - wie vorstehend schon beschrieben - in Achsrichtung des Tragkörpers 5 durch achsparallele Bohrungen zur Rückseite 26 des Tragkörpers 5. Die Anordnung der strahlungssensitiven Verbindungsstellen 4, 34 erfolgt symmetrisch zur Ebene 30, welche senkrecht auf der Grundfläche 25 steht und die Sektoren 40, 41 voneinander trennt.

Die Thermosäulen 3, 33 sind gegenpolar in Reihe geschaltet, so daß an den Meßleitungen 10 ein kompensiertes Ausgangssignal anliegt. Zur weiteren Kompensation ist ein Thermoelement 50 in dem der Wärmestrahlung ausgesetzten Sektor 40 angeordnet. Dessen Ausgangssignal gibt die Ist-Temperatur auf der Grundseite 25 des Körpers 5 an.

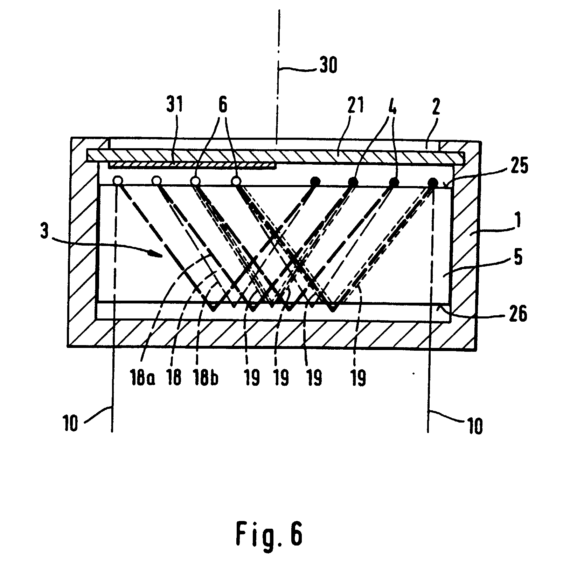

Ein auch bei diffuser Wärmestrahlung von Störstrahlungen weitgehend bereinigtes Ausgangssignal wird erhalten, wenn die Grundfläche 25 des Tragkörpers 5 in vier gleiche Sektoren 40a, 40b, 41a, 41b aufgeteilt wird. In jedem Sektor sind sechs strahlungssensitive Verbindungsstellen 4a, 4b bzw. 34a, 34b angeordnet, wobei die strahlungssensitiven verbindungsstellen 34a und 34b hinter jeweils einem Schild 31a und 31b liegen. Dabei sind die Sektoren derart vorgesehen, daß die der Wärmestrahlung ausgesetzten Sektoren 40a und 40b und die durch den wärmeundurchlässigen Schild 31a, 31b abgeschirmten Sektoren 41a, 41b in Umfangsrichtung wechseln. Die Sektoren der Fig. 4 und 5 bilden Kreissegmente (Viertelkreis, Halbkreis), wobei die einer Wärmestrahlung ausgesetzte Thermosäule mit der hinter einem Schild angeordneten Thermosäule gegenpolar in Reihe geschaltet ist. Es hat sich gezeigt, daß bei Anordnung von vier Thermosäulen in der in Fig. 5 dargestellten Weise bei einem Sensor nach Fig. 3 ein sehr präzises Ausgangssignal erzielt ist. Die strahlungssensitiven Verbindungsstellen 4a, 4b und 34a, 34b der vier Thermosäulen nach Fig. 5 liegen achssymmetrisch zur Hochachse 29, die bevorzugt die Zylinderachse des zylindrischen Tragkörpers 5 ist. Es kann zweckmäßig sein, den Tragkörper 5 quaderförmig auszubilden.

Das Ausführungsbeispiel nach Fig. 6 entspricht im Grundaufbau dem nach Fig. 1, weshalb für gleiche Teile gleiche Bezugszeichen verwendet sind. Die Grundfläche 25 kann gemäß Fig. 4 durch die Ebene 30 in zwei Sektoren 40, 41 aufgeteilt sein. Im wärmestrahlungsdurchlässigen Sektor 40 liegen die strahlungssensitiven Verbindungsstellen 4 einer Thermosäule 3, deren Vergleichs-Verbindungsstellen 6 auf der Seite der Grundfläche 25 in dem wärmestrahlungsundurchlässigen Sektor 41 liegen. Die Drahtelemente 18a, 18b eines jeden Thermopaares 18 verlaufen durch eine Bohrung 19 im Tragkörper 5 von der Grundfläche 25 aus dem Sektor 40 zur Rückseite 26 und von dieser durch eine weitere Bohrung 19 zurück zur Grundfläche 25 in den strahlungsundurchlässigen Sektor 41. Bei einer derartigen Anordnung kann eine getrennte Thermosäule zur Kompensation entfallen. Eine entsprechende Anordnung ist auch bei einer Aufteilung in vier Sektoren (Fig. 5) mit einer oder zwei Thermosäulen möglich, die dann gegenpolar in Reihe geschaltet sind. Eine Thermosäule liegt mit strahlungssensitiven Verbindungsstellen 4a im Sektor 40a; die Vergleichs-Verbindungsstellen der gleichen Thermosäule liegen im benachbarten, abgedeckten Sektor 41. Entsprechend sind die Gruppen der Verbindungsstellen der zweiten Thermosäule in den Sektoren 40b und 41b angeordnet.

## Patentansprüche

1. Sensor zur strahlungspyrometrischen Bestimmung der Temperatur eines Meßobjektes, insbesondere unter Bedingungen hoher Umgebungstemperaturen im Innenraum eines Trockners oder dgl., bestehend aus einem wärmeleitenden Gehäuse (1) mit einem wärmestrahlungsdurchlässigen Fenster (2) und mindestens einer im Gehäuse (1) angeordneten Thermosäule (3, 33), die aus Thermopaaren (18) von miteinander verbundenen Elementen (18a, 18b) aus gegenseitig thermoelektrisch aktiven Materialien besteht, wobei eine erste, strahlungssensitive Verbindungsstelle (4, 34) der Elemente (18a, 18b) dem Fenster (2) zugewandt liegt, und die strahlungssensitiven Verbindungsstellen (4, 34) über einer dem Fenster (2) zugewandten Grundfläche (25) eines Tragkörpers (5) verteilt liegen, wobei der Tragkörper (5) aus einem hitzebeständigen, wärmeisolierenden Material besteht, und der Tragkörper (5) von der Grundfläche (25) ausgehende Durchgangsöffnungen (19) aufweist, die je ein Element (18a, 18b) der Thermopaare (18) aufnehmen, wobei die zweiten Vergleichs-Verbindungsstellen (6, 36) der Thermopaare (18) in einem von der Wärmestrahlung abgedeckten Bereich liegen.

2. Sensor nach Anspruch 1,
dadurch gekennzeichnet, daß die Vergleichs-Verbindungsstellen von dem Tragkörper (9) abgedeckt sind und auf dessen Rückseite (26) liegen.

3. Sensor nach Anspruch 1,
dadurch gekennzeichnet, daß jedes Element (18a, 18b) der Thermopaare (18) durch den Tragkörper (5) zu dessen Rückseite (26) und durch eine weitere Durchgangsöffnung (19) von der Rückseite (26) zurück zur Grundfläche (25) geführt ist, wobei die Vergleichs-Verbindungsstellen (6, 36) auf der Grundfläche (25) hinter einem strahlungsundurchlässigen Schild (9, 39) liegen.

4. Sensor nach einem der Ansprüche 1 bis 3,
dadurch gekennzeichnet, daß der Tragkörper (5) etwa die Form eines Zylinders, Quaders oder dgl. mit voneinander abgewandten, zueinander etwa parallel liegenden Flachseiten aufweist, die die Grundfläche (25) und die Rückseite (26) bilden.

5. Sensor nach einem der Ansprüche 1 bis 4,
dadurch gekennzeichnet, daß die Grundfläche (25) eben ist.

6. Sensor nach einem der Ansprüche 1 bis 5,
dadurch gekennzeichnet, daß mindestens ein weiteres Thermopaar (17) angeordnet ist, dessen strahlungssensitive Verbindungsstelle (16) auf der Seite der Grundfläche (25) und dessen Vergleichs-Verbindungsstelle (15) auf der Rückseite (26) des Tragkörpers (5) liegt, wobei die strahlungssensitive Verbindungsstelle (16) hinter einem wärmestrahlungsundurchlässigen Schild (9) angeordnet ist.

7. Sensor nach Anspruch 6,
dadurch gekennzeichnet, daß mehrere weitere Thermopaare eine zweite Thermosäule (33) bilden, die einen gleichen Aufbau und eine gleiche Anordnung wie die erste Thermosäule (3) aufweist, wobei die strahlungssensitiven heißen Verbindungsstellen (34) der zweiten Thermosäule (33) hinter dem wärmestrahlungsundurchlässigen Schild (31) liegen, und daß die zweite Thermosäule (33) mit der ersten Thermosäule (3) gegenpolar in Reihe geschaltet ist.

8. Sensor nach Anspruch 6 oder 7,
dadurch gekennzeichnet, daß der Schild (9, 31) auf seiner dem Meßobjekt zugewandten Seite strahlungsreflektierend beschichtet ist.

9. Sensor nach einem der Ansprüche 6 bis 8,
dadurch gekennzeichnet, daß der Schild (9, 31) auf dem Fenster (2) angeordnet ist und mit dem Fenster (2) wärmeleitend verbunden ist.

10. Sensor nach einem der Ansprüche 1 bis 9,
dadurch gekennzeichnet, daß die Vergleichs-Verbindungsstellen (6, 15, 36) wärmeleitend miteinander verbunden sind.

11. Sensor nach einem der Ansprüche 1 bis 10,
dadurch gekennzeichnet, daß die Grundfläche (25) in gleiche Sektoren (40, 41) aufgeteilt ist und in jedem Sektor (40, 41) eine Gruppe von Verbindungsstellen (4, 6) angeordnet ist.

12. Sensor nach Anspruch 11,
dadurch gekennzeichnet, daß die Sektoren (40, 41) gleiche Fläche aufweisen und mit gleich ausgebildeten und angeordneten Thermosäulen (3, 33) bestückt sind.

13. Sensor nach Anspruch 11 oder 12,
dadurch gekennzeichnet, daß die unter dem Fenster (2) der Wärmestrahlung ausgesetzten Sektoren (40a und 40b) und die durch einen wärmeundurchlässigen Schild (31) abgeschirmten Sektoren (41a, 41b) alternierend wechseln.

14. Sensor nach einem der Ansprüche 11 bis 13,
dadurch gekennzeichnet, daß die Sektoren (40, 40a, 40b, 41, 41a, 41b) Kreissegmente sind.

15. Sensor nach einem der Ansprüche 1 bis 14,
dadurch gekennzeichnet, daß die auf einem Tragkörper (9) angeordneten Thermosäulen (3, 33) achssymmetrisch zu einer senkrecht auf der Grundfläche (25) stehenden Hochachse (29) des Tragkörpers (5) liegen.

16. Sensor nach einem der Ansprüche 1 bis 15,
dadurch gekennzeichnet, daß die dem wärmestrahlungsdurchlässigen Fenster (2) zugewandte Grundfläche (25) des Tragkörpers (9) eine strahlungsreflektierende Schicht (25a) trägt.

17. Sensor nach einem der Ansprüche 1 bis 16,
dadurch gekennzeichnet, daß die strahlungssensitiven Verbindungsstellen (4, 34) strahlungsabsorbierend beschichtet sind, insbesondere mit einem strahlungsabsorbierenden Pigment geschwärzt sind.

18. Sensor nach einem der Ansprüche 1 bis 17,
dadurch gekennzeichnet, daß die strahlungssensitiven Verbindungsstellen (4, 34) mit wärmestrahlungsabsorbierenden, zum Meßobjekt ausgerichteten, insbesondere metallischen Flächenelementen (14) verbunden sind.

19. Sensor nach einem der Ansprüche 1 bis 18,
dadurch gekennzeichnet, daß die vom Schild (9, 31) abgedeckten Verbindungsstellen (16, 34) strahlungsreflektierend ausgebildet, insbesondere verspiegelt sind.

20. Sensor nach einem der Ansprüche 1 bis 19,
dadurch gekennzeichnet, daß in einem der Wärmestrahlung ausgesetzten Bereich (40, 40a, 40b) der Grundfläche (25) ein Temperatursensor (50), insbesondere ein Thermoelement angeordnet ist.

21. Sensor nach einem der Ansprüche 1 bis 20,
dadurch gekennzeichnet, daß an der Anschlußstelle (27) einer aus dem Gehäuse (1) herausgeführten Meßleitung (10) eine Kompensationsleitung (11) aus einem gegenüber der Meßleitung (10) thermoelektrisch aktiven Material angeschlossen und aus dem Gehäuse (1) herausgeführt ist.

22. Sensor nach einem der Ansprüche 1 bis 21,
dadurch gekennzeichnet, daß der Tragkörper (5) und die Scheibe (7) aus einem elektrisch isolierenden Material bestehen.

23. Sensor nach einem der Ansprüche 1 bis 22,
dadurch gekennzeichnet, daß das Gehäuse (1) aus einem Metall, insbesondere Aluminium oder Kupfer besteht.

24. Sensor nach einem der Ansprüche 1 bis 23,
dadurch gekennzeichnet, daß das Verhältnis des Drahtdurchmessers zur Drahtlänge zwischen zwei Verbindungsstellen (46, 34, 36) größer als etwa 1:100 ist und das Drahtelement (18b) aus dem Material höherer Wärmeleitfähigkeit einen verhältnismäßig geringeren Durchmesser aufweist.

## Claims

1. Sensor for radiation-pyrometric determination of the temperature of an object of measurement, in particular under conditions of high ambient temperatures inside a drier or the like, consisting of a heat-conducting housing (1) with a window (2) allowing the passage of thermal radiation and at least one thermopile (3, 33) located in the housing (1), which consists of thermocouples (18) of interconnected elements (18a, 18b) of mutually thermoelectrically active materials, in which case a first, radiation-sensitive connecting point (4, 34) of the elements (18a, 18b) is located facing the window (2) and the radiation-sensitive connecting points (4, 34) are distributed over a base (25) of a support member (5) facing the window (2), the support member (5) consisting of a heat-resistant, thermally insulating material, and the support member (5) comprising slots (19) starting from the base (25), which each receive a member (18a, 18b) of the thermocouples (18), the second comparison connection points (6, 36) of the thermocouples (18) lying in a region covered by the thermal radiation.

2. Sensor according to Claim 1, characterized in that the comparison connecting points are covered by the support member (9) and lie on its rear side (26).

3. Sensor according to Claim 1, characterized in that each member (18a, 18b) of the thermocouples (18) is guided through the support member (5) to its rear side (26) and through a further slot (19) from the rear side (26) back to the base (25), the comparison connection points (6, 36) being located on the base (25) behind a shield (9, 39) which does not allow radiation to pass.

4. Sensor according to one of Claims 1 to 3, characterized in that the support member (5) is approximately in the shape of a cylinder, block or the like with flat sides remote from each other, lying approximately parallel to each other, which flat sides form the base (25) and the rear side (26).

5. Sensor according to one of Claims 1 to 4, characterized in that the base (25) is flat.

6. Sensor according to one of Claims 1 to 5, characterized in that at least one further thermocouple (17) is provided, whereof the radiation-sensitive connecting point (16) lies on the side of the base (25) and its comparison connection point (15) lies on the rear side (26) of the support member (5), the radiation-sensitive connecting point (16) being located behind a shield (9) which does not allow thermal radiation to pass.

7. Sensor according to Claim 6, characterized in that several further thermocouples form a second thermopile (33), which has the same construction and the same arrangement as the first thermopile (3), the radiation-sensitive hot connection point (34) of the second thermopile (33) lying behind the shield (31) which does not allow thermal radiation to pass, and that the second thermopile (33) is connected in series to the first thermopile (3) with poles reverse.

8. Sensor according to Claim 6 or 7, characterized in that the shield (9, 31) has a coating to reflect radiation on its side facing the object to be measured.

9. Sensor according to one of Claims 6 to 8, characterized in that the shield (9, 31) is located on the window (2) and connected in a heat-conducting manner to the window (2).

10. Sensor according to one of Claims 1 to 9, characterized in that the comparison connection points (6, 15, 36) are connected to each other in a heat-conducting manner.

11. Sensor according to one of Claims 1 to 10, characterized in that the base (25) is divided into equal sectors (40, 41) and a group of connecting points (4, 6) is located in each sector (40, 41).

12. Sensor according to Claim 11, characterized in that the sectors (40, 41) have the same surface area and are equipped with identically constructed and arranged thermopiles (3, 33).

13. Sensor according to Claim 11 or 12, characterized in that the sectors (40a and 40b) exposed to thermal radiation underneath the window (2) and the sectors (41a, 41b) screened by a shield (31) which does not allow heat to pass, alternate.

14. Sensor according to one of Claims 11 to 13, characterized in that the sectors (40, 40a, 40b, 41, 41a, 41b) are circular segments.

15. Sensor according to one of Claims 1 to 14, characterized in that the thermopiles (3, 33) located on a support member (9) lie axially symmetrically with respect to a vertical axis (29) of the support member (5), which is perpendicular to the base (25).

16. Sensor according to one of Claims 1 to 15, characterized in that the base (25) of the support member (9) facing the window (2) allowing the passage of thermal radiation supports a layer (25a) reflecting radiation.

17. Sensor according to one of Claims 1 to 16, characterized in that the radiation-sensitive connecting points (4, 34) are coated in order to absorb radiation, in particular are blackened with a radiation-absorbing pigment.

18. Sensor according to one of Claims 1 to 17, characterized in that the radiation-sensitive connecting points (4, 34) are connected to surface members (14) absorbing thermal radiation, aligned with respect to the object to be measured, in particular metallic surface members.

19. Sensor according to one of Claims 1 to 18, characterized in that the connecting points (16, 34) covered by the shield (9, 31) are constructed to reflect radiation, in particular are metallized.

20. Sensor according to one of Claims 1 to 19, characterized in that a temperature sensor (50), in particular a thermocouple element is located in a region (40, 40a, 40b) of the base (25) subject to thermal radiation.

21. Sensor according to one of Claims 1 to 20, characterized in that at the connection point (27) of a measuring lead (10) guided out of the housing (1) a compensation lead (11) consisting of a material which is thermoelectrically active in comparison with the measuring lead (10) is connected and guided out of the housing (1).

22. Sensor according to one of Claims 1 to 21, characterized in that the support member (5) and the disc (7) consist of an electrically insulating material.

23. Sensor according to one of Claims 1 to 22, characterized in that the housing (1) consists of a metal, in particular aluminium or copper.

24. Sensor according to one of Claims 1 to 23, characterized in that the ratio of the wire diameter to the wire length between two connecting points (46, 34, 36) is greater than approximately 1:100 and the wire member (18b) of the material having higher thermal conductivity has a relatively smaller diameter.

## Revendications

1. Capteur destiné à déterminer par pyrométrie à rayonnement la température d'un objet de mesure, en particulier dans des conditions de températures environnantes élevées dans l'espace intérieur d'un sécheur ou similaire, qui se compose d'un boîtier (1) thermiquement conducteur qui comporte une fenêtre (2) perméable au rayonnement thermique et au moins une thermopile (3, 33) qui est agencée dans le boîtier (1) et se compose de thermocouples (18) d'éléments reliés entre eux (18a, 18b) en matières à effets thermoélectriques opposés, un premier emplacement de connexion (4, 34) sensible au rayonnement des éléments (18a, 18b) étant tourné vers la fenêtre (2) et les emplacements de connexion (4, 34) sensibles aux rayonnements étant répartis sur une surface de base (25) d'un corps porteur (5) tournée vers la fenêtre (2), le corps porteur (5) se composant d'une matière thermiquement isolante, réfractaire, et le corps porteur (5) comportant des ouvertures traversantes (19) qui partent de la surface de base (25) et qui reçoivent chacune un élément (18a, 18b) des thermocouples (18), les deuxièmes emplacements de connexion (6, 36) de comparaison des thermocouples (18) étant situés dans une zone protégée du rayonnement thermique.

2. Capteur selon la revendication 1,
caractérisé en ce que
les emplacements de connexion de comparaison sont recouverts par le corps porteur (9) et sont situés sur son côté arrière (26).

3. Capteur selon la revendication 1, caractérisé en ce que
chaque élément (18a, 18b) des thermocouples (18) est guidé à travers le corps porteur (5) vers son côté arrière (26) et guidé en retour de son côté arrière (26) vers la surface de base (25) à travers une autre ouverture traversante (19), les emplacements de connexion (6, 36) de comparaison étant situés sur la surface de base (25) derrière un blindage (9, 39) imperméable au rayonnement.

4. Capteur selon l'une des revendications 1 à 3,
caractérisé en ce que
le corps porteur (5) présente à peu près la forme d'un cylindre, d'un parallélépipède ou similaire, à côtés plats à peu près parallèles entre elles opposées l'une à l'autre, qui constituent la surface de base (25) et le côté arrière (26).

5. Capteur selon l'une des revendications 1 à 4,
caractérisé en ce que la surface de base (25) est plate.

6. Capteur selon l'une des revendications 1 à 5,
caractérisé en ce qu'il comprend au moins un autre thermocouple (17) dont l'emplacement de connexion (16) sensible au rayonnement est situé sur le côté de la surface de base (25) et dont l'emplacement de connexion (15) de comparaison est situé sur le côté arrière du corps porteur (5), l'emplacement de connexion (16) sensible au rayonnement étant agencé derrière un blindage (9) imperméable au rayonnement thermique.

7. Capteur selon la revendication 6,
caractérisé en ce que plusieurs autres thermocouples constituent une deuxième thermopile (33) de même structure et de même agencement que la première thermopile (3), les emplacements de connexion chauds (34) sensiblement au rayonnement de la deuxième thermopile (33) étant situés derrière le blindage (31) imperméable au rayonnement thermique et en ce que la deuxième thermopile (33) est montée en série avec la première thermopile (3) en opposition de polarité.

8. Capteur selon la revendication 6 ou 7,
caractérisé en ce que le blindage (9, 31) est revêtu d'une couche réfléchissant le rayonnement sur son côté tourné vers l'objet de mesure.

9. Capteur selon l'une des revendications 6 à 8,
caractérisé en ce que
le blindage (9, 31) est agencé sur la fenêtre (2) et est relié de façon thermiquement conductrice à la fenêtre (2).

10. Capteur selon l'une des revendications 1 à 9,
caractérisé en ce que les emplacements de connexion (6, 15, 36) de comparaison sont reliés entre eux de façon thermiquement conductrice.

11. Capteur selon l'une des revendications 1 à 10,
caractérisé en ce que la surface de base (25) est divisée en secteurs égaux (40, 41) et un groupe d'emplacement de connexion (4, 6) est agencé dans chaque secteur (40, 41).

12. Capteur selon la revendication 11,
caractérisé en ce que les secteurs (40, 41) sont de même superficie et sont équipés de thermopiles (3, 33) de même structure et de même agencement.

13. Capteur selon la revendication 11 ou 12,
caractérisé en ce que les secteurs (40a et 40b) exposés au rayonnement thermique sous la fenêtre (2) et les secteurs protégés par un blindage (31) imperméable à la chaleur sont agencés en alternance (41a, 41b).

14. Capteur selon l'une des revendications 11 à 13,
caractérisé en ce que les secteurs (40, 40a, 40b, 41, 41a, 41b) sont des segments circulaires.

15. Capteur selon l'une des revendications 1 à 14,
caractérisé en ce que les thermopiles (3, 33) agencées sur un corps porteur (9) sont disposées selon une symétrie axiale par rapport à un axe vertical (29), dressé perpendiculairement sur la surface de base (25), du corps porteur (5).

16. Capteur selon l'une des revendications 1 à 15,
caractérisé en ce que la surface de base (25) du corps porteur (9) tournée vers la fenêtre (2) transparente au rayonnement thermique porte une couche (25a) réfléchissant le rayonnement.

17. Capteur selon l'une des revendications 1 à 16, caractérisé en ce que les emplacements de connexion (4, 34) sensibles au rayonnement sont revêtus d'une manière absorbant le rayonnement, en particulier sont noircis d'un pigment absorbant le rayonnement.

18. Capteur selon l'une des revendications 1 à 17,
caractérisé en ce que les emplacements de connexion (4, 34) sensibles aux rayonnements sont connectés à des éléments de surface (14) absorbant le rayonnement thermique, en particulier métalliques, orientés vers l'objet de mesure.

19. Capteur selon l'une des revendications 1 à 18,
caractérisé en ce que en ce que les emplacements de connexion (16, 34) recouverts par le blindage (9, 31) sont réalisés de façon à réfléchir un rayonnement, en particulier pourvus d'un revêtement à effet de miroir.

20. Capteur selon l'une des revendications 1 à 19,
caractérisé en ce qu'un capteur (50) de température, en particulièrement un thermoélément, est agencé dans une zone (40, 40a, 40b), exposée au rayonnement thermique, de la surface de base (25).

21. Capteur selon l'une des revendications 1 à 20,
caractérisé en ce qu'une ligne de compensation (11) en une matière à effet thermoélectrique opposé à celui de la ligne de mesure (10) est raccordée à l'emplacement de raccordement (27) d'une ligne de mesure (10) qui sort du boîtier (1), et qu'elle sort du boîtier (1).

22. Capteur selon l'une des revendications 1 à 21,
caractérisé en ce que le corps porteur (5) et le disque (7) se composent d'une matière électriquement isolante.

23. Capteur selon l'une des revendications 1 à 22,
caractérisé en ce que le boîtier (1) est en métal, en particulier en aluminium ou en cuivre.

24. Capteur selon l'une des revendications 1 à 23,
caractérisé en ce que le rapport entre le diamètre de fil et la longueur de fil entre deux emplacements de connexion (46, 34, 36) est supérieure à environ 1:100 et l'élément de fil (18b) en matière à conductibilité thermique plus élevée est d'un diamètre relativement plus petit.
